# EUROPEAN PATENT SPECIFICATION

(11) **EP 0 347 070 B1**
(45) Date of publication and mention of the grant of the patent: **31.03.1993**
(21) Application number: 89305555.8
(22) Date of filing: 02.06.1989
(51) Int. Cl.: C03B 9/193, C03B 9/38

(54) **A plunger assembly for a glassware forming machine**
Pegel für eine Maschine zum Herstellen von Glasgegenständen
Poinçon pour une machine de fabrication d'objets en verre

(30) Priority: 15.06.1988 US 207344
(43) Date of publication of application: 20.12.1989
(73) Proprietor: Emhart Glass Machinery Investments Inc., Wilmington, Delaware 19801 (US)
(72) Inventor: Trahan, Albert J., Vernon Connecticut 06086 (US)
(74) Representative: Wetters, Basil David Peter

(56) References cited:
- DE-A- 2 012 369
- US-A- 3 148 969
- US-A- 4 272 273
- US-A- 4 636 240

## Description

The present invention relates to a plunger assembly for use in an individual section glass ware forming machine which forms glass ware by the press and blow process. The plunger in such a machine presses a gob of molten glass into a parison which is subsequently blown into the desired shape.

Such plunger assemblies conventionally comprise a cooling tube extending into the plunger, and it is extremely important that this cooling tube be located and maintained precisely centred within the plunger so that cooling will take place uniformly around the plunger.

In US Patent 4272273 a plunger assembly is described which provides cooling air for cooling the interior of the plunger. However it does not describe a cooling tube which extends into the plunger nor how such a tube could be secured in place.

In US Patent 4636240 a plunger assembly is described which comprises a plunger and a cooling tube extending into the plunger. The cooling tube is located in position by being placed over an upwardly extending hollow post, and has a lower flange portion which seats on to a support member mounted in a sleeve. Cooling air enters the cooling tube through the hollow post, and exhaust air passes down between the interior of the plunger and the cooling tube, through a series of holes provided in the lower flange which are aligned with similar holes in the support member. This construction not only requires the careful alignment of the holes in the flange of the cooling tube with those of the support member, but also relies, for location of the cooling tube with respect to the plunger, on the accurate positions of the post and its correct orientation with respect to the plunger.

It is an object of the present invention to provide a plunger assembly which comprises a cooling tube which will be precisely centrally maintained within the plunger of the plunger assembly.

The present invention provides a plunger assembly for a glassware forming machine comprising:
a hollow plunger having an elongated tapered top portion and a base portion which has an annular recess
a plunger holder having a top portion which has a bore for securely engaging the plunger base portion with the plunger top portion extending beyond the plunger holder top portion,
an elongated cooling tube having a perforated top portion and an inlet portion,
means for securing the cooling tube to the plunger including
an annular collar secured around the inlet portion of the tube and comprising
a plurality of equally spaced axially extending wedges said wedges being adapted to be forcefully wedged into the annular recess of the plunger base portion. until the tops thereof engage the top surface of said recess precisely centering and axially locating the perforated top portion within the tapered top portion of the plunger,
the distances between the top of the wedges and said collar and between the wedges being selected to define uniformly sized and spaced discharge openings having a collective area through which cooling air discharged from the cooling tube perforations can exit said plunger top portion.

There now follows a description, to be read with reference to the accompanying drawings, of a preferred embodiment of the invention.

In the accompanying drawings
Figure 1 is an oblique exploded view of a plunger, plunger holder and adapter of a plunger assembly according to the invention.
Figure 2 is an axial cross-sectional view of the adapter assembly mounting the plunger to the vertically reciprocating piston of one of the cylinders in an individual section forming machine;
Figure 3 is an axial cross-sectional view of the plunger with its cooling tube secured thereto;
Figure 4 is an enlarged view similar to that of Figure 3 illustrating the lower portion of the adapter assembly secured to the reciprocating piston; and
Figure 5 is a view taken along the lines 5-5 of Figure 4.

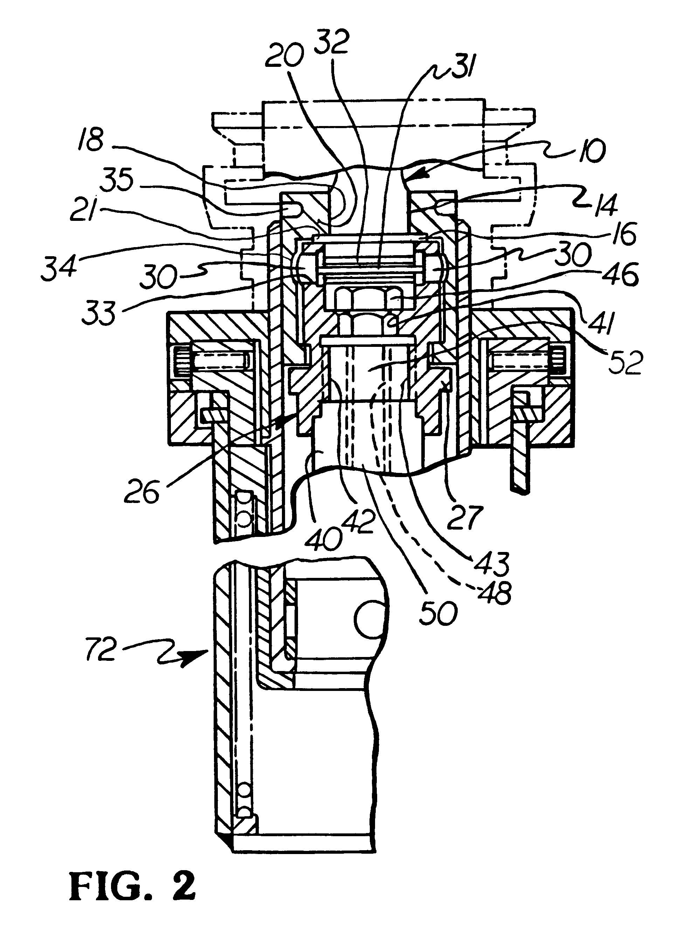

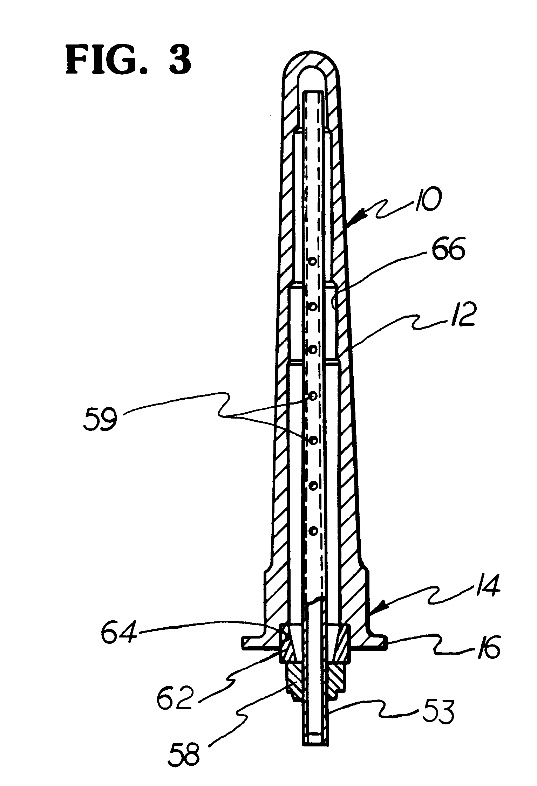

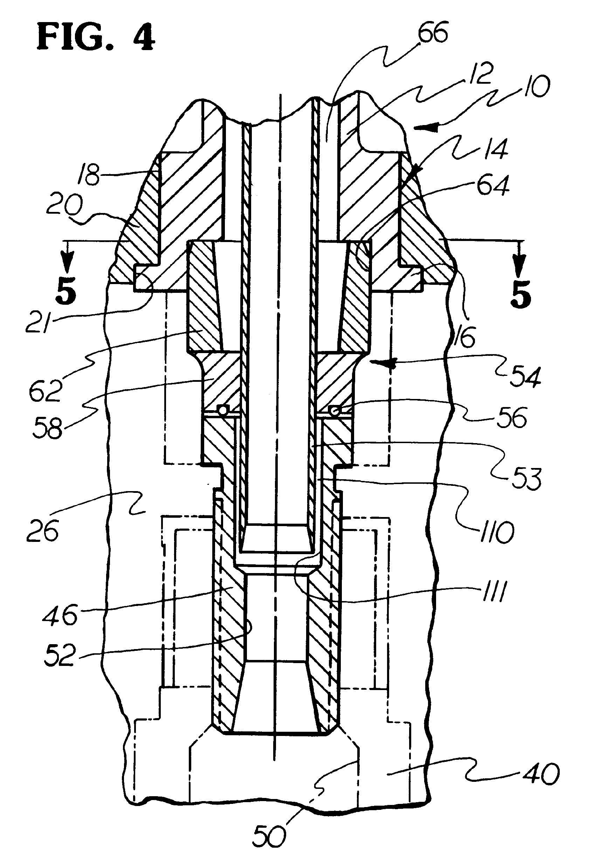

The plunger assembly includes a hollow plunger element 10 which has an elongated tapered upper or plunger portion 12 (Figure 3) and a cylindrical bottom or base portion 14 which ends in an annular flange 16. The cylindrical base portion 14 is press fitted into a thru-bore 18 in the top wall of a plunger holder 20 (Figures 2 and 4). This thru-bore 18 is suitably recessed at 21 to partially receive the annular flange 16 thereby defining the bottom surface of the plunger element 10 as a bearing surface. The plunger holder 20 is cylindrical in shape having an open bottom 24, which is partially closed by a pair of opposed, inwardly extending locking flanges 25.

The plunger assembly also includes an adapter 26 which has an upper portion above an annular collar 27. The upper portion has a cylindrical body 28 which has a pair of opposed increased diameter portions 29 which define an outer diameter corresponding to the inner diameter of the plunger holder opening 24. These increased diameter portions 29 are discontinued at diametrically opposed locations to reduce the outer diameter of the upper portion sufficiently to permit the lowering of the plunger holder over the upper portion of the adapter when the location of these reduced diameter portions correspond to the location of the locking flanges 25. When the plunger holder is fully lowered, the bearing surface of the plunger base will engage the upper surface X of adapter 26.

The distance between the plunger bearing surface and the upper surface of these locking flanges 25 corresponds to the vertical height of the increased diameter portions 29 so that when the plunger holder 20 is fully lowered onto surface X of the adapter 26, the plunger holder can be rotated 90° to locate the locking flanges 25 between these increased diameter portions 29 and the adapter collar 27, thereby preventing vertical separation of the plunger holder and the adapter. An opposed pair of detents 30, which are biased outwardly through detent apertures 33 (Figure 2) by a spring 31 contained within a suitable groove 32 in the plunger adapter and which enter recesses 34 in the plunger holder when so rotated, prevent the unintentional rotation of the plunger holder 20 relative to the adapter 26. There are four recesses; two to locate and retain the adapter in position and two to locate the adapter for removal. To join these pieces together by locating the detents in their associated recesses 34 or to release them, a tool (not shown) can be used which has opposed keys for engaging opposed holder slots 35. A pair of notches 34a are cut in the inner wall of the holder at the bottom to cam the detents inwardly as the plunger holder is lowered onto the adapter.

To join the plunger assembly to the vertically reciprocating piston 40, the bottom of the adapter has an upwardly extending threaded bore 42 which threads onto a threaded portion 43 on the top of the piston 40. A hex opening 41 permits the use of a hex head tool to thread the adapter onto the piston. To lock these members together, a bolt 46 extends downwardly through the hex opening 41 in the adapter and is threadedly received by a threaded bore 48 in the top portion of the piston 40.

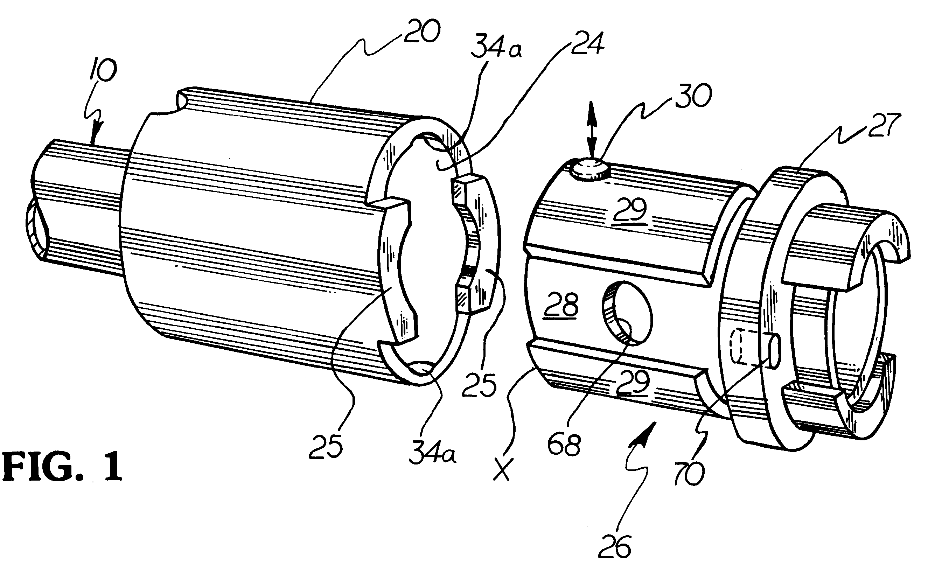

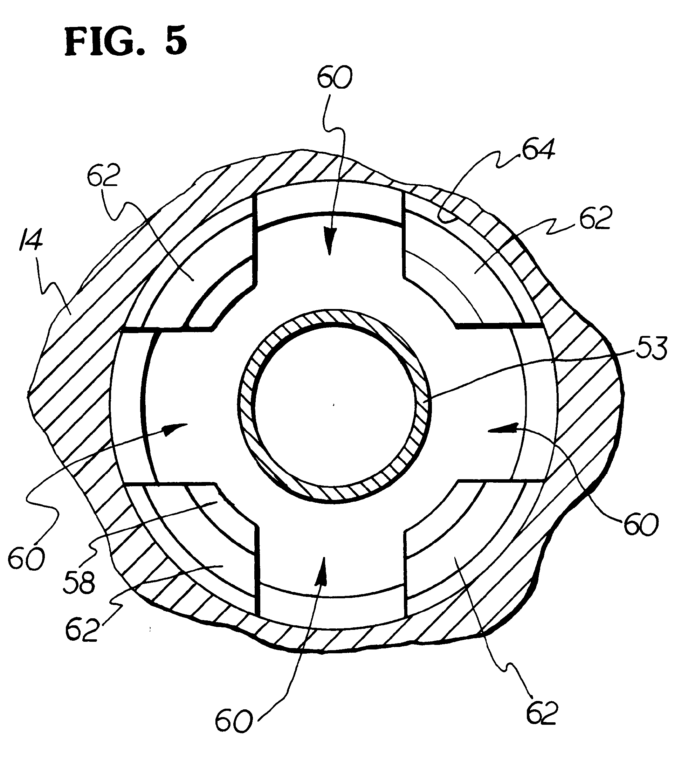

Cooling air is supplied upwardly through the center hole 50 of the piston 40 (Figure 4), through the center hole 52 of the locking bolt 46 and then through the elongated tube 53 of the cooling tube assembly 54 (an "O" ring 56 effects a seal between the locking bolt 46 and an annular collar 58 of the cooling tube assembly that is secured to the cooling tube and out of holes 59 in the side of and a hole at the end of the cooling tube. This air flows downwardly along the plunger and outwardly through openings 60 (see Figure 5) between four wedge elements 62 of the cooling tube assembly, which are integral with the annular collar 58 and which are wedgingly received within a recess 64 defined at the entrance of the plunger opening 66 to secure and maintain the cooling tube precisely centered and axially located within the plunger throughout the operation of the plunger assembly. Since the air has been heated, it has a greater volume than the inleted air. Accordingly, the size of this collective opening 60 should be at least two and one half times larger than the area of the cooling tube 53. The exhausted, heated air passes through opposed holes 68 (Figure 1) in the adapter upper portion and flows downwardly through the channels formed between the enlarged diameter sections 29, the upper body 28 and the plunger holder 20 through holes 70 in the annular collar and into the plunger housing assembly 72 (Figure 2).

## Claims

1. A plunger assembly for a glassware forming machine comprising:
a hollow plunger (10) having an elongated tapered top portion (12) and a base portion (14) which has an annular recess (64)
a plunger holder (20) having a top portion which has a bore (18) for securely engaging the plunger base portion (14) with the plunger top portion (12) extending beyond the plunger holder top portion,
an elongated cooling tube (53) having a perforated top portion (59) and an inlet portion,
means for securing the cooling tube (53) to the plunger (10) including
an annular collar (58) secured around the inlet portion of the tube (53) and comprising
a plurality of equally spaced axially extending wedges (62) said wedges being adapted to be forcefully wedged into the annular recess (64) of the plunger base portion (14) until the tops thereof engage the top surface of said recess (64) precisely centering and axially locating the perforated top portion within the tapered top portion (12) of the plunger (10),
the distances between the top of the wedges (62) and said collar (58) and between the wedges being selected to define uniformly sized and spaced discharge openings (60) having a collective area through which cooling air discharged from the cooling tube perforations can exit said plunger top portion.

2. A plunger assembly according to claim 1, wherein there are four wedges (62).

3. A plunger assembly according to claim 2, wherein the collective exit area defined between said wedges (62), the annular collar (58) and said plunger base (14) is at least 2.5 times the area of the inlet area of said cooling tube.

## Patentansprüche

1. Plungeranordnung für eine Maschine zum Formen von Glasgegenständen mit
- einem Hohlplunger (10), der ein längliches kegelförmiges Oberteil (12) und ein Bodenteil (14) aufweist, das eine ringförmige Ausnehmung (64) hat,
- einem Plungerhalter (20), der ein Oberteil besitzt, das eine Bohrung (18) für einen sicheren Eingriff des Plungerbodenteils (14) mit dem Plungeroberteil (12) hat, das sich über dem Plungerhalteroberteil befindet,
- einem Kühlrohr (53), das ein perforiertes Oberteil (59) und einen Einlaßbereich hat, und mit
- einer Einrichtung zum Fixieren des Kühlrohrs (53) am Plunger (10), welche
- einen Ringkragen (58) einschließt, der um den Einlaßbereich des Rohres (53) befestigt ist und besteht aus
- einer Vielzahl gleichmäßig voneinander beabstandeter, sich axial erstreckender Keile (62), wobei diese Keile so angepaßt sind, daß sie unter Krafteinwirkung in die ringförmige Ausnehmung (64) des Plungerbodenteiles (14) bewegbar sind, bis deren Oberteile an die obere Fläche der Ausnehmung (64) angreifen und das perforierte Oberteil im kegelförmigen Oberteil (12) des Plungers (10) präzise zentrieren und axial positionieren,
- wobei die Abstände zwischen der Oberseite der Keile (62) und dem Kragen (58) sowie zwischen den Keilen so gewählt sind, daß sich gleichgroße und gleichmäßig im Abben, die einen Sammelbereich aufweisen, durch welchen die Kühlluft, die aus den Kühlrohrperforationen ausgeblasen wird, aus dem Plungeroberteil austreten kann.

2. Plungeranordnung nach Anspruch 1, bei welcher vier Keile (62) vorgesehen sind.

3. Plungeranordnung nach Anspruch 2, bei welcher der Austrittsbereich, der zwischen den Keilen (62) und dem Ringkragen (58) und dem Plungerboden (14) vorhanden ist, zumindest das 2,5-fache des Einlaßbereiches des Kühlrohres beträgt.

## Revendications

1. Ensemble à poinçon pour une machine à mouler du verre comprenant :
- un poinçon creux (10) ayant une partie supérieure allongée (12) à section décroissante et une partie de base (14) munie d'un évidement annulaire (64) ;
- un support de poinçon (20) ayant une partie supérieure qui présente un perçage (18) destiné à entrer en prise étroite avec la partie de base (14) du poinçon, la partie supérieure (12) du poinçon se prolongeant au-delà de la partie supérieure du support de poinçon ;
- un tube de refroidissement (53) de forme allongée ayant une partie supérieure (59) perforée et une partie d'entrée ;
- des moyens servant à fixer le tube de refroidissement (53) au poinçon (10), comprenant :
- une bague annulaire (58) fixée autour de la partie d'entrée du tube (53) et comprenant :
- une série de coins (62) équidistants s'étendant axialement et adaptés pour être coincés à force dans l'évidement annulaire (64) de la partie de base (14) du poinçon jusqu'à ce que les extrémités supérieures soient en appui contre la surface supérieure de l'évidement (64) en centrant exactement et en positionnant axialement la partie supérieure perforée dans la partie supérieure (12) à section décroissante du poinçon (10) ;
- les distances entre l'extrémité supérieure des coins (62) et la bague (58) et entre les coins étant choisies pour définir des ouvertures de sortie (60) de dimensions uniformes et uniformément espacées, possédant collectivement une surface à travers laquelle l'air de refroidissement débité par les perforations du tube de refroidissement peut sortir de la partie supérieure du poinçon.

2. Ensemble à poinçon selon la revendication 1, dans lequel sont prévus quatre coins (62).

3. Ensemble à poinçon selon la revendication 2, dans lequel la surface collective de section de sortie définie entre les coins (62), la bague annulaire (58) et la base (14) du poinçon est au moins de 2,5 fois la surface de section de l'entrée du tube de refroidissement.
